# EUROPÄISCHE PATENTSCHRIFT

(11) **EP 0 490 248 B1**
(45) Veröffentlichungstag und Bekanntmachung des Hinweises auf die Patenterteilung: **23.08.1995**
(21) Anmeldenummer: 91120808.0
(22) Anmeldetag: 04.12.1991
(51) Int. Cl.: B29C 45/03, B29C 45/50

(54) **Plastifizier- und Spritzeinheit für Gummi-Spritzgiessmaschinen**
Plasticising and injection unit for rubber injection moulding machines
Unité de plastification et d'injection pour machines à mouler par injection les caoutchoucs

(30) Priorität: 06.12.1990 DE 4038843
(43) Veröffentlichungstag der Anmeldung: 17.06.1992
(73) Patentinhaber: Klöckner Desma Elastomertechnik GmbH, 78567 Fridingen (DE)
(72) Erfinder: Stengelin, Ernst, W-7201 Neuhausen (DE)
(74) Vertreter: Röther, Peter, Dipl.-Phys.

(56) Entgegenhaltungen:
- FR-A- 1 330 124
- GB-A- 1 335 569
- US-A- 4 875 849

## Beschreibung

Die Erfindung betrifft eine Plastifizier- und Spritzeinheit für Gummi-Spritzgießmaschinen gemäß den Merkmalen des Oberbegriffs des Patentanspruchs 1.

Für die Herstellung einer Vielzahl von technischen Spritzgießartikeln aus Gummi, beispielsweise Faltenbälgen, Dichtungsringen, Gummistopfen, Schwingelementen mit Metalleinlagen oder Torsionsgummielementen, hat es sich bisher als vorteilhaft erwiesen, diese mittels - in Abhängigkeit von der vorgegebenen Größe der zu erzeugenden Artikel und des zu verwendenden Formwerkzeugs - möglichst vieler Formnester in einem einzelnen Formwerkzeug durch gleichzeitiges Einspritzen einer fließfähig gemachten - plastifizierten - Gummimischung in diese Formnester zu erzeugen, wobei die Trennebene(n) des Formwerkzeugs in der horizontalen Ebene angeordnet ist/sind und die Einspritzung zentral von oben erfolgt. Die letztgenannten Konstruktionsmerkmale beruhen unter anderem darauf, daß einerseits - im Gegensatz zu Spritzgießartikeln aus einer ganzen Reihe möglicher Kunststoffe - die Endprodukte nach dem Vulkanisieren in den Formnestern mehr oder weniger kleben und im allgemeinen mit speziellen Auswertern aus diesen entfernt und abtransportiert werden müssen, was wegen der notwendigen unterschiedlichen Auswurfarbeit von Formnest zu Formnest aus einer horizontal orientierten Werkzeugplatte mit Formnestern einfacher und sicherer zu bewerkstelligen ist als aus einer vertikal orientierten Werkzeugplatte mit Formnestern, und andererseits ein gleichmäßigeres Fließbild für die im allgemeinen hochviskose plastifizierte Gummimischung in dem - dann symmetrisch zu erstellenden - System der Verteilerkanäle zwischen Einspritzdüse und Formnestern im Gegensatz zum auch möglichen zentralen Einspritzen in der oder einer horizontal orientierten Trennebene des Formwerkzeugs erzielt werden kann. Abgesehen davon, daß die in Rede stehenden technischen Spritzgießartikel aus Gummi in vielen Fällen, beispielsweise bei den vorgenannten Schwingelementen mit Metalleinlagen oder bei Radialwellendichtungen (Simmerringen), durch Spritzgießen um vorher in die Formnester eingebrachte Einlagen aus anderen - festen - Materialien herum erzeugt werden, wobei das Einbringen der Einlagen in Formnester in einer horizontal orientierten Werkzeugplatte ebenfalls einfacher und sicherer zu bewerkstelligen ist als bei entsprechenden vertikal orientierten Werkzeugplatten.

Um einerseits die normalerweise hochviskose plastifizierte Gummimischung mit möglichst geringen Druckverlusten in die Formnester einspritzen zu können und damit eine weitere Erhöhung des gegenüber plastifizierten Kunststoffen sowieso schon deutlich höheren Einspritzdruckes von bis zu 2000 bar zu vermeiden und um andererseits die Bauhöhe der in Rede stehenden GummiSpritzgießmaschinen zu beschränken, wurden für diese Maschinen aus den bekannten Plastifizier- und Spritzeinheiten, bei denen ein in einer Einspritzdüse mündender und im Ausgangszustand für das Spritzgießen einen Schneckenvorraum aufweisender Schneckenzylinder an seinem der Schließvorrichtung der Spritzgießmaschine abgewandten Ende einerseits eine Einfüllöffnung für das zu plastifizierende Gut aufweist und andererseits sowohl einen rotierenden Schneckenantrieb als auch eine die Plastifizierschnecke des Schneckenzylinders als Druckkolben betätigende, mit dem Schneckenzylinder fluchtende Kolben-Zylinder-Anordnung trägt, zunächst Plastifizier- und Spritzeinheiten entwickelt, bei denen die Spritzeinheit aus mindestens zwei symmetrisch und parallel zum mit vertikaler Symmetrieachse und nach unten weisender Einspritzdüse auf dem oberen Ende der Schließvorrichtung der in Rede stehenden Spritzgießmaschine montierten Schneckenzylinder einschließlich eines ihn nach oben abschließenden rotierenden Schneckenantriebs angeordneten Kolben-Zylinder-Anordnungen besteht, die mit dem oberen Ende der Schließvorrichtung und über geeignete starre Verbindungselemente auch mit der Plastifizierschnecke kraftschlüssig verbunden sind. Eine solche Anordnung hat den Vorteil, daß die plastifizierte Gummimischung auf direktem Wege mit geringsten Druckverlusten aus dem Schneckenvorraum über die Einspritzdüse und die Verteilerkanäle im Formwerkzeug in die einzelnen Formnester eingespritzt werden kann.

Nachteilig ist bei diesen Anordnungen jedoch, daß die Einfüllöffnung des Schneckenzylinders im allgemeinen nur über Leitern und Gerüste zu erreichen ist, da die Mehrzahl der in Rede stehenden Schließvorrichtungen von Spritzgießmaschinen Längen bzw. Höhen über alles von mindestens Mannshöhe und darüber haben, wozu dann noch die Länge bzw. Höhe des Schneckenzylinders bis zu seiner Einfüllöffnung hinzuzurechnen ist, die normalerweise in derselben Größenordnung wie vorgenannt liegt. Das Beschicken der in Rede stehenden Spritzgießmaschine erfolgt aber in der Regel in der Form, daß dem Schneckenzylinder von Hand oder von einer Rolle mit begrenztem Aufnahmevermögen Streiten von festen, mehr oder weniger elastischen und mit allen erforderlichen Zusätzen versehenen Gummimischungen aufgegeben werden, was die mehr oder weniger häufige Anwesenheit von Bedienungspersonal an der Einfüllöffnung erfordert und in dem Fall, daß das Bedienungspersonal zwischenzeitlich weitere Tätigkeiten auszuführen hat, zu ständigen zeitraubenden und sicherheitsgefährdenden Benutzungen der Leitern und Gerüste zwingt. Abgesehen davon, daß jeder nicht nur kurzzeitige Maschinenstop die Gefahr birgt, daß das in der Plastifizierschnecke befindliche Material vulkanisiert und eine Reinigung des Schneckenzylinders erfordert, die ebenfalls unter erheblichen Sicherheitsbedenken und mit hohem Aufwand zumindest in wesentlichen Teilen auf dem Gerüst durchgeführt werden muß.

Ein Weg, die vorbeschriebene schlechte Zugänglichkeit des Schneckenzylinders zumindest teilweise zu beheben, ist - wenn auch aufgrund einer völlig anderen Aufgabenstellung - in der US-PS 4 875 849 beschrieben worden, bei deren Gegenstand es sich um eine Gummi-Spritzgießmaschine mit vertikal arbeitender Schließvorrichtung und zentraler Einspritzung der fließfähigen Gummimischung von oben in das das oder die Formennest(er) enthaltende Formwerkzeug handelt, für die die fließfähige Gummimischung in einer üblichen kombinierten Plastifizier- und Spritzeinheit mit unmittelbar hintereinander geschaltetem Schneckenzylinder, hydraulischer Kolben-Zylinder-Anordnung zur Spritzdruckerzeugung und rotierendem Schneckenantrieb hergestellt wird, wobei diese Gesamtkombination knapp über der Ebene des oberen Endes der Schließeinheit der Spritzgießmaschine derart mit horizontaler Längsachse angeordnet ist, daß die Ausgangsöffnung des Schneckenzylinders an ein mittig auf dem oberen Ende der Schließeinheilt angeordnetes Vorratsgefäß anschließt, dessen Ausgang eine vertikal nach unten gerichtete Düse darstellt, so daß das Vorratsgefäß gleichzeitig als Umlenk-Vorrichtung wirkt. Die vorgenannte kombinierte Plastifizier- und Spritzeinheit erlaubt zwar insgesamt eine niedrigere Bauhöhe der vollständigen Spritzgießmaschine, weist jedoch immer noch den Nachteil auf, daß sie bei der üblichen Größe der in Rede stehenden Spritzgießmaschinen sowohl zum Befüllen der Plastifiziereinheit mit dem Ausgangsmaterial als auch für Wartungsarbeiten an der Plastifizier- und/oder Spritzeinheit nicht auf einfache Art und Weise zugänglich ist, da sie die Schließeinheit einseitig erheblich überkragt und dort neben der Schließeinheit eine eigene stabile Tragkonstruktion erfordert, die wiederum mittels eines zusätzlichen Gerüsts oder einer Leiterkonstruktion umgangen werden muß. Abgesehen davon, daß die vorgenannte Tragkonstruktion in nachteiliger Weise einerseits die erforderliche Stellfläche für eine Spritzgießmaschine der vorgenannten Art erheblich vergrößert und andererseits zusätzliche Kosten für eine derartige Maschine verursacht.

Der Erfindung liegt daher die Aufgabe zugrunde, eine Plastifizier- und Spritzeinheit für Gummi-Spritzgießmaschinen der vorbeschriebenen Art zur Verfügung zu stellen, deren Schneckenzylinder und insbesondere die darin befindliche Einfüllöffnung ohne Verwendung von Leitern und Gerüsten zugänglich Ist und die darüber hinaus sowohl den Platzbedarf der nunmehr entstehenden Gesamtanordnung der Spritzgießmaschine als auch zusätzliche Konstruktionsmaßnahmen zur Abstützung der neuen Plastifizier- und Spritzeinheit weitgehend minimiert.

Die Erfindung löst diese Aufgabe mit Hilfe der Merkmale des kennzeichnenden Teils des Patentanspruchs 1.

Dabei erweist es sich als ganz besonders vorteilhaft, daß die Plastifiziereinheit und die Spritzeinheit derart auf dem oberen Ende der Schließvorrichtung angeordnet sind, daß sich die Spritzeinheit ausgangsseitig an die Plastifiziereinheit anschließt, weil durch diese spezielle Anordnung von Plastifiziereinheit und Spritzeinheit erreicht wird, daß die jetzt vorhandenen beidseitigen seitlichen Überstände von Plastifiziereinheit und Spritzeinheit die vorher notwendigen seitlichen Auskragungen des erforderlichen Gerüsts nicht wesentlich übertreffen und daß die neue Anordnung und Gewichtsverteilung der vorgenannten Einheiten gegenüber der früheren Anordnung keine wesentlichen Änderungen der tragenden Teile der vorhandenen Schließvorrichtung erfordert. Dabei kann die Plastifiziereinheit vorteilhafterweise mittels einfacher Maßnahmen so angeordnet werden, daß ihr etwa auf der Höhe des oberen Endes der Schließeinheit befindliches Ende mit der Einfüllöffnung für das Ausgangsmaterial so weit über das Gerüst der Schließeinheit hinausragt, daß diese Einfüllöffnung vom Boden aus - allenfalls unter Verwendung eines leicht zu betretenden Podestes - frei zugänglich ist. Gleichzeitig wird auch die Zugänglichkeit sowohl der Plastifizier- als auch der Spritzeinheit für Reinigungs- und Wartungsarbeiten in vorteilhafter Weise verbessert.

In einer vorteilhaften Ausführungsform der Erfindung wird die zwischen Ausgangsöffnung des Schneckenzylinders und Eingang in das Anguß- oder Vertellersystem im Formwerkzeug erforderliche Umlenk-Vorrichtung sowohl mit dem ausgangsseitigen Ende des Schneckenzylinders als auch mit der Einspritzdüse kraftschlüssig aber lösbar verbunden, so daß einerseits zu jeder Zeit in einfacher Art und Weise ein Auswechseln sowohl der Umlenk-Vorrichtung als auch der Einspritzdüse und Anpassen beider untereinander oder auch an geänderte Betriebsanforderungen, beispielsweise nach Auswechselung des Formwerkzeugs, möglich ist und andererseits sichergestellt wird, daß sich die Geometrie und damit der Fließwiderstand des Weges der plastifizierten Gummimischung vom Schneckenvorraum über die Umlenk-Vorrichtung und die Einspritzdüse in das System der Verteilerkanäle zumindest bei Einhaltung der Temperaturbedingungen für die Fließfähigkeit der Gummimischungen nicht ändert.

Als besonders vorteilhaft erweist sich bei einer weiteren Ausführungsform der erfindungsgemäßen Vorrichtung auch, daß der durch die Umlenk-Vorrichtung verlaufende Verbindungskanal für die fließfähige Gummimischung einer stetig gekrümmten Kurve folgt, weil dadurch nicht nur die Möglichkeit eröffnet, sondern sichergestellt wird, daß bei einem Einspritzdruck von ca. 2000 bar ein maximaler Druckverlust in der Größenordnung von 100 bar durch die Umlenkung entsteht.

Bei einer weiteren Ausführungsform der Erfindung ist besonders vorteilhaft, daß zumindest das ausgangsseitige Ende des Schneckenzylinders und ein festzuhaltender Bestandteil der Spritzeinheit kraftchlüssig mit dem oberen Ende der Schließvorrichtung verbunden sind, weil damit erreicht wird, daß ohne wesentliche Konstruktionsänderungen an der Schließvorrichtung eine kompakte, stabile und kostengünstige Gesamtanordnung der in Rede stehenden Gummi-Spritzgießmaschine hergestellt werden kann, die weder für die Plastifiziereinheit noch für die Spritzeinheit zusätzliche Abstütrungen benötigt.

Bei einer anderen Ausführungsform der Erfindung ist es dagegen von besonderem Vorteil, daß zumindest das ausgangsseitige Ende des Schneckenzylinders und ein festzuhaltender Bestandteil der Spritzeinheit kraftschlüssig mit einer auf dem oberen Ende der Schließvorrichtung ebenfalls kraftschlüssig montierten Hubvorrichtung verbunden sind, weil es damit ermöglicht wird, einerseits die Gesamtanordnung der betrachteten Spritzgießmaschine ähnlich kompakt und stabil zu bauen wie bei der vorher beschriebenen Ausführungsform der Erfindung, darüber hinaus aber bei durchaus zumutbaren höheren Kosten einerseits die Bedingungen für die Wartung und den Austausch von Plastifiziereinheit, Spritzeinheit, Umlenk-Vorrichtung und Einspritzdüse oder Teilen davon erheblich zu verbessern und andererseits die Anpassung der in Rede stehenden Maschine an unterschiedlich hohe Formwerkzeuge wesentlich zu vereinfachen.

Als sehr vorteilhaft ist bei einer besonderen Ausführungsform der Erfindung auch anzusehen, daß die Spritzeinheit aus einer einzigen Kolben-Zylinder-Anordnung besteht, deren Längsachse mit der Längsachse des Schneckenzylinders fluchtet, weil dadurch vermieden wird, daß - im Gegensatz zu den ursprünglichen Spritzgießmaschinen der betrachteten Art mit mindestens zwei untereinander und mit der Plastifiziereinheit parallelen Kolben-Zylinder-Anordnungen für die Spritzeinheit - beim Auftreten von Schäden oder Verschleißerscheinungen an Kolben oder Dichtungen in der Spritzeinheit keine unerwünschten Drehmomente an der Gesamtanordnung der Spritzgießmaschine auftreten können, die diese beschädigen oder zerstören. Darüber hinaus ist selbstverständlich auch die Steuerung einer einzigen Kolben-Zylinder-Anordnung wesentlich einfacher und kostengünstiger zu installieren und zu betreiben als eine solche für mehrere parallele Anordnungen.

Eine weitere vorteilhafte Ausführungsform der Erfindung ist in dem Fall gegeben, daß das dem Kolben der Kolben-Zylinder-Anordnung abgewandte Ende der zugehörigen Kolbenstange dem ausgangsseitigen Ende des Schneckenzylinders zugewandt und als festzuhaltender Bestandteil der Spritzeinheit kraftschlüssig am oberen Ende der Schließvorrichtung bzw. an einer auf diesem Ende kraftschlüssig montierten Hubvorrichtung angeschlagen und das gegenüber der Schließvorrichtung verschiebbar angeordnete Zylindergehäuse der Kolben-Zylinder-Anordnung über geeignete Anschläge und dazwischen installierte Zuganker starr mit der Plastifizierschnecke verbunden ist, weil dabei einerseits die Zuganker zumindest um die Länge des Zylindergehäuses verkürzt werden können, was deren Masse und damit die insgesamt von der Kolben-Zylinder-Anordnung zu bewegende Masse und dementsprechend den für diese Bewegung erforderlichen Energieaufwand entsprechend reduziert, und andererseits zumindest die Anschläge für die Zuganker am Zylindergehäuse kürzer, leichter und einfacher gestaltet werden können als entsprechende Anschläge an der dünneren Kolbenstange, da das auf sie von den Zugankern ausgeübte Drehmoment geringer ist.

Ausführungsbeispiele erfindungsgemäßer Plastifizier- und Spritzeinheiten sind in der Zeichnung dargestellt. Es zeigen:
- Fig. 1: Seitenansicht einer Gummi-Spritzgießmaschine nach dem Oberbegriff des Patentanspruchs 1 (Stand der Technik) - teilweise in durchbrochener Darstellung,
- Fig. 2: Vorderansicht einer Gummi-Spritzgießmaschine mit einer erfindungsgemäßen Plastifizier- und Spritzeinheit - teilweise in durchbrochener Darstellung,
- Fig. 3: Schnitt durch eine erfindungsgemäße Plastifizier- und Spritzeinheit ohne Hubvorrichtung auf dem oberen Ende der Schließvorrichtung,
- Fig. 4: Aufsicht auf die in Fig. 3 dargestellte Plastifizier- und Schließeinheit - teilweise durchbrochen,
- Fig. 5: Schnitt durch eine erfindungsgemäße Plastifizier- und Spritzeinheit mit Hubvorrichtung auf dem oberen Ende der Schließvorrichtung.

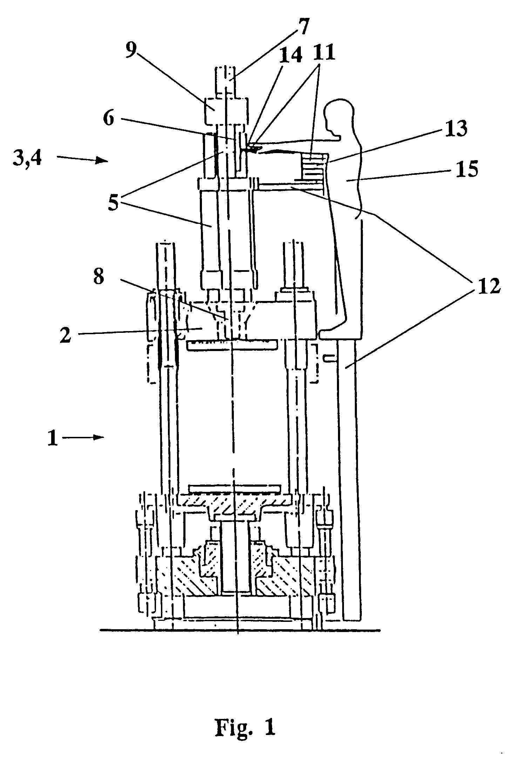

Die Figur 1 zeigt in schematischer und teilweise in durchbrochener Darstellung die Seitenansicht einer Gummi-Spritzgießmaschine gemäß den Merkmalen des Oberbegriffs des Patentanspruchs 1, wie sie aus dem Stand der Technik bekannt ist. Sie weist eine auf dem Fundament stehende Schließvorrichtung 1 auf, auf deren oberem Ende 2 eine Plastifizier- und Spritzeinheit 3, 4 bekannter Art angeordnet ist, die aus zwei parallelen, kraftschlüssig mit dem oberen Ende 2 der Schließvorrichtung 1 verbundenen Kolben-Zylinder-Anordnungen 5 - von denen in der vorliegenden Darstellung nur eine zu erkennen ist - und einem dazwischen parallel montierten Schneckenzylinder 6, der in der vorliegenden Darstellung weitgehend verdeckt ist, an seinem oberen Ende einen rotierenden Schneckenantrieb 7 trägt und an seinem unteren Ende in einer Einspritzdüse 8 mündet. Die aus den Kolben-Zylinder-Anordnungen 5 herausragenden Enden der zugehörigen Kolbenstangen sind über eine jochartige Anschlagbrücke 9 mit der hier nicht dargestellten Plastifizierschnecke verbunden, die mittels der vorgenannten Kolben-Zylinder-Anordnungen 5 kolbenartig im Schneckenzylinder 6 bewegt werden kann, um nach der Plastifizierung einer ausreichenden Menge der gewünschten Gummimischung diese in das Formwerkzeug einzuspritzen. Der Nachschub der zu plastifizierenden Gummimischung in den Bereich der Plastifizierschnecke des Schneckenzylinders 6 erfolgt in Form vorbereiteter Streifen 11 aus festem, mehr oder weniger elastischem Rohmaterial mit allen zuvor eingeknetenen Zusatzstoffen von einer auf einem Gerüst 12 installierten Vorratsrolle 13 in die Einfüllöffnung 14 des Schneckenzylinders 6, wobei jedoch nach jedem Rollenwechsel oder einem Riß des abzurollenden Streifens 11 ein Mitglied 15 des Bedienungspersonals mittels einer in der vorliegenden Darstellung nicht explizit zu erkennenden Leiter auf das Gerüst 12 steigen muß, um den Anfang des Streifens 11 wieder in die Einfüllöffnung 14 des Schneckenzylinders 6 einzufädeln.

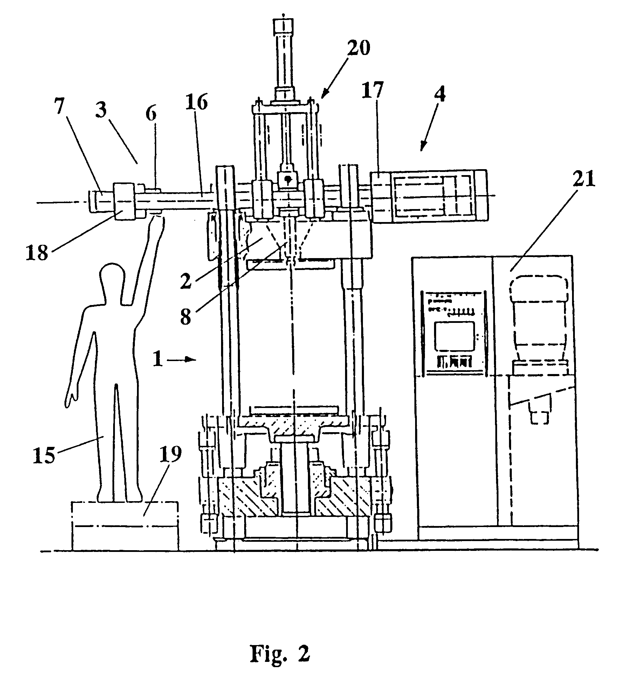

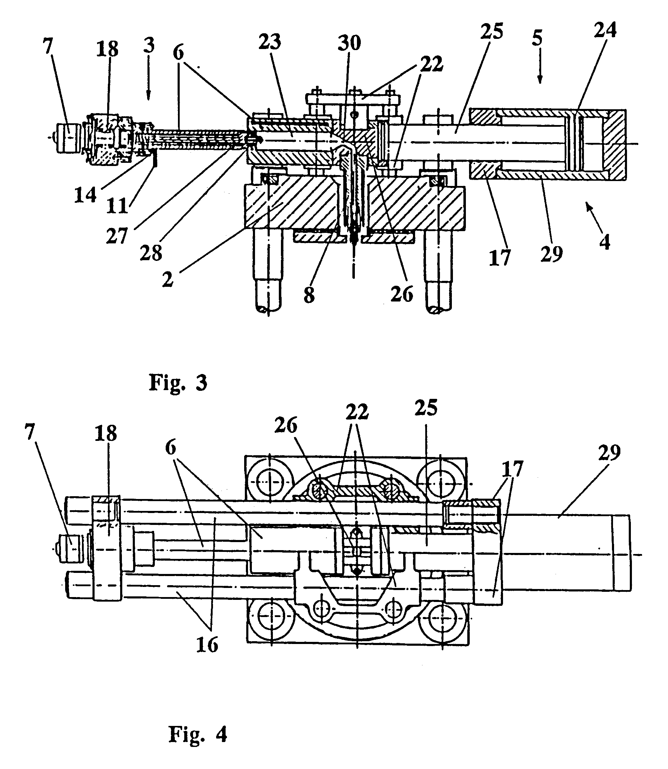

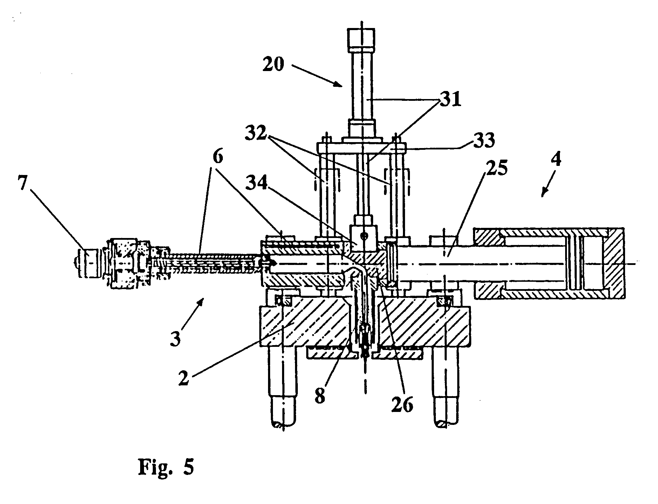

Die Figur 2 zeigt im Gegensatz zur Figur 1 die Vorderansicht einer Gummi-Spritzgießmaschine mit einer erfindungsgemäßen Plastifizier- und Spritzeinheit, bei der die Längsachsen sowohl der Plastifiziereinheit 3 als auch der Spritzeinheit 4 horizontal ausgerichtet sind und wobei die Spritzeinheit 4 ausgangsseitig von der Plastifiziereinheit 3 angeordnet ist. Von der Plastifiziereinheit 3 ist in der vorliegenden Darstellung der wesentliche Teil allerdings durch einen von zwei Zugankern 16 verdeckt, die in der vorliegenden Darstellung vor und hinter der Plastifiziereinheit 3 und teilweise auch der Spritzeinheit 4 die letztgenannte über Anschläge 17 und eine jochartige Anschlagbrücke 18 mit der hier nicht explizit dargestellten Plastifizierschnecke des Schneckenzylinders 6 kraftschlüssig verbinden - wie in der noch folgenden Figur 4 im Detail zu erkennen ist. Im nun vorliegenden Fall kann das Einführen von Streifen des Rohmaterials in die Einfüllöffnung 14 durch ein Mitglied 15 der Bedienungsmannschaft vom Fundament oder Boden oder zumindest von einem leicht betretbaren Podest 19 aus erfolgen. Für den Transport der plastifizierten Gummimischung vom hier verdeckten Schneckenvorraum in die Einspritzdüse 8 ist eine hier ebenfalls verdeckte Umlenk-Vorrichtung erforderlich, die den noch folgenden Figuren 3 und 5 im Detail entnommen werden kann. Sowohl die Plastifiziereinheit 3 als auch die Spritzeinheit 4 sind mit ihren gegeneinander stehenden Enden einschließlich der Umlenk-Vorrichtung und der Einspritzdüse 8 kraftschlüssig an einer hydraulischen Hubvorrichtung 20 aufgehängt, die ihrerseits kraftschlüssig auf dem oberen Ende 2 der Schließvorrichtung 1 montiert ist. Sie erleichtert insbesondere die Wartung und das Auswechseln der Plastifiziereinheit 3, der Spritzeinheit 4, der Umlenk-Vorrichtung und der Einspritzdüse 8 oder Teilen davon. Außerdem erleichtert sie ganz wesentlich die Anpassung der in Rede stehenden Gummi-Spritzgießmaschine an unterschiedlich hohe Formwerkzeuge nach deren Auswechselung. Nur der Vollständigkeit halber zeigt die Figur 2 auch die Bedienungsaggregate 21. Soweit für die Figur 2 dieselben Bezugszeichen verwendet werden wie für die Figur 1, handelt es sich um identische Teile der Spritzgießmaschine.

Die Figur 3 zeigt eine erfindungsgemäße Plastifizier- und Spritzeinheit im Schnitt, die ohne Zwischenschaltung einer Hubvorrichtung unmittelbar auf dem oberen Ende 2 einer Schließvorrichtung kraftschlüssig angeschlagen ist, und zwar mit Hilfe einer Aufnahme 22, die sowohl das vordere Ende des Schneckenzylinders 6 mit dem Schneckenvorraum 23 als auch das dem Kolben 24 einer Kolben-Zylinder-Anordnung 5 abgewandte Ende der zugehörigen Kolbenstange 25 und die Umlenk-Vorrichtung 26 erfaßt. Der vollständige Schneckenzylinder 6 ist im dargestellten Fall zweigeteilt, wobei der eine Teil an seinem einen - der Spritzeinheit 4 abgewandten - Ende den rotierenden Schneckenantrieb 7 und davor eine jochartige Anschlagbrücke 18 trägt, in seinem Inneren die Plastifizierschnecke 10 führt und an seinem anderen - der Spritzeinheit 4 zugewandten - Ende als Kolben 27 mit einer Rückschlagsperre 28 bekannter Art ausgebildet ist und dort in den anderen - den Schneckenvorraum 23 zur Aufnahme der plastifizierten Gummimischung enthaltenden - Teil derart hineinragt, daß er den Schneckenvorraum 23 an seinem der Spritzeinheit 4 abgewandten Ende in jedem Fall gegen die plastifizierte Gummimischung abdichtend verschließt und mittels der Spritzeinheit 4 weiter in den Schneckenvorraum 23 hineingezogen werden kann, um die plastifizierte Gummimischung über die Umlenk-Vorrichtung 26 und die Einspritzdüse 8 in das Formwerkzeug der Spritzgießmaschine einzuspritzen. Die Zweiteilung des Schneckenzylinders 6 steht dabei nur beispielhaft für alle denkbaren Konstruktionsmöglichkeiten einer Plastifiziereinheit, bei der die Plastifizierschnecke in einem Schneckenzylinder sowohl das Plastifizieren des Rohmaterials durch eine Rotationsbewegung als auch das Einspritzen des plastifizierten Gutes in ein Formwerkzeug durch eine kolbenartige Bewegung bewerkstelligt. Die Einfüllöffnung 14 des Schneckenzylinders 6 zur Aufnahme von Streifen 11 des zu plastifizierenden Rohmaterials befindet sich In bekannter Art und Weise an dem dem rotierenden Schneckenantrieb 7 zugewandten Ende der Plastifizierschnecke 10.

Die Spritzeinheit 4 besitzt außer der bereits oben beschriebenen Kolbenstange 25 mit dem Kolben 24 ein gegenüber dem Kolben 24 bewegliches Zylindergehäuse 29 mit zwei Anschlägen 17, an denen - wie der Figur 4 im einzelnen zu entnehmen ist - jeweils ein hier nicht erkennbarer Zuganker 16 angreift, der an seinem anderen Ende mit der jochartigen Anschlagbrücke 18 kraftschlüssig in Eingriff steht. Zwischen dem Ausgang des Schneckenraums 23 und dem Anschlagende der Kolbenstange 25 ist eine kraftschlüssig zumindest mit dem vorderen Ende des Schneckenzylinders 6 verbundene Umlenk-Vorrichtung 26 installiert, die mittels eines Verbindungskanals 30, der einer stetig gekrümmten Kurve folgt, die plastifizierte Gummimischung beim Einspritzen aus der horizontalen in eine vertikal nach unten gerichtete Fließrichtung umlenkt, wobei der entstehende Druckverlust möglichst gering gehalten wird.

Die Figur 4 zeigt die Anordnung der Figur 3 in einer Aufsicht. Die Bezugszeichen sind dieselben wie in Figur 3. Besonders deutlich ist hier die Anordnung der Zuganker 16 in Verbindung mit den Anschlägen 17 und der jochartigen Anschlagbrücke 18 zu erkennen.

Im Betrieb ist das Zylindergehäuse 29 zunächst auf seinen von der Aufnahme 22 entferntesten Punkt verschoben. Dann wird der rotierende Schneckenantrieb 7 bei gleichzeitiger Aufgabe von Streifen 11 des Rohmaterials in den Schneckenzylinder 6 von Hand oder von einer Vorratsrolle 13 in Tätigkeit gesetzt, wobei gleichzeitig die Beaufschlagung des Kolbens 24 auf seiner der Plastifiziereinheit 3 abgewandten Seite mit einem hydraulischen oder pneumatischen Medium verringert wird, so daß die gesamte Anordnung aus Plastifiziereinheit 3 und Spritzeinheit 4 bei gleichzeitiger Füllung des Schneckenvorraums 23 mit plastifizierter Gummimischung derart verschoben wird, daß der rotierende Schneckenantrieb 7 voranläuft. ist genügend plastifizierte Gummimischung zur Füllung aller Formnester im Formwerkzeug im Schneckenvorraum 23 angesammelt, wird der rotierende Schneckenantrieb 7 abgestellt und gleichzeitig der Kolben 24 auf seiner der Plastifiziereinheit 3 abgewandten Seite mit hydraulischem oder pneumatischem Medium derart beaufschlagt, daß die Gesamtanordnung aus Plastifiziereinheit 3 und Spritzeinheit 4 so schnell nach rechts verschoben wird, daß der Inhalt des Schneckenvorraums 23 mit dem erforderlichen Einspritzdruck über die Umlenk-Vorrichtung 26 und die Einspritzdüse 8 in das Formwerkzeug eingespritzt wird. Wenn das Zylindergehäuse 29 seinen von der Aufnahme 22 entferntesten Punkt erreicht hat, kann ein neuer Spritzgießzyklus gestartet werden.

Der Gegenstand der Figur 5 unterscheidet sich von demjenigen der Figur 3 im wesentlichen dadurch, daß sowohl das vordere - den Schneckenvorraum 23 enthaltende - Ende des Schneckenzylinders 6 als auch das der Plastifiziereinheit 3 zugewandte Ende der Kolbenstange 25 und die Umlenk-Vorrichtung 26 mit der Einspritzdüse 8 nicht unmittelbar am oberen Ende 2 einer Schließvorrichtung, sondern zunächst mittels einer Anschlagvorrichtung 34 kraftschlüssig an einer Hubvorrichtung 20 angeschlagen sind, die aus einer hydraulischen oder pneumatischen Kolben-Zylinder-Anordnung 31 besteht, die ihrerseits mittels einer Plattform 33 und Stützen 32 kraftschlüssig mit dem oberen Ende 2 der vorgenannten Schließvorrichtung verbunden ist.

Die Funktionsweise der letztbeschriebenen Anordnung entspricht derjenigen, die im Detail zu Figur 3 beschrieben wurde. Zusätzlich kann hier die Gesamtanordnung aus Plastifiziereinheit 3 und Spritzeinheit 4 einschließlich der Umlenk-Vorrichtung 26 und der Einspritzdüse 8 vom oberen Ende 2 einer Schließvorrichtung so weit abgehoben werden, daß die Wartung oder das Auswechseln der vorgenannten Komponenten oder Teilen davon wesentlich erleichtert wird. Abgesehen davon, daß damit auch eine wesentlich vereinfachte Anpassung der in Rede stehenden Gummi-Spritzgießmaschine an unterschiedlich hohe Formwerkzeuge bei deren Auswechselung erreicht werden kann.

### Bezugszelchenllste

- 1: Schließvorrichtung
- 2: oberes Ende der Schließvorrichtung
- 3: Plastifiziereinheit
- 4: Spritzeinheit
- 5,31: Kolben-Zylinder-Anordnungen
- 6: Schneckenzylinder
- 7: rotierender Schneckenantrieb
- 8: Einspritzdüse
- 9,18: Anschlagbrücken
- 10: Plastifizierschnecke
- 11: Streifen von Rohmaterial
- 12: Gerüst
- 13: Vorratsrolle
- 14: Einfüllöffnung
- 15: Mitglied des Bedienungspersonals
- 16: Zuganker
- 17: Anschläge
- 19: Podest
- 20: Hubvorrichtung
- 21: Bedienungaggregate
- 22: Aufnahme
- 23: Schneckenvorraum
- 24,27: Kolben
- 25: Kolbenstange
- 26: Umlenk-Vorrichtung
- 28: Rückschlagsperre
- 29: Zylindergehäuse
- 30: Verbindungskanal
- 32: Stützen
- 33: Plattform
- 34: Anschlagvorrichtung

## Patentansprüche

1. Plastifizier- (3) und Spritzeinheit (4) für GummiSpritzgießmaschinen mit vertikal arbeitender Schließvorrichtung (1) und zentraler Einspritzung (8) der fließfähigen Gummimischung von oben in das das oder die Formnest(er) enthaltende Formwerkzeug, wobei die Plastifiziereinheit (3) aus einem Schneckenzylinder (6) mit horizontaler Längsachse und einem rotierenden Schneckenantrieb (7) und die Spritzeinheit (4) aus einer oder mehreren, die Plastifizierschnecke (10) mittels geeigneter kraftschlüssiger Verbindungselemente (16,17,18) im Schneckenzylinder (6) als Kolben betätigenden Kolben-Zylinder-Anordnung(en) (Einspritzzylinder(n)) (24,25,29) mit ebenfalls jeweils horizontaler Längsachse und einer Wirkungslinie der von ihnen erzeugten Spritzkraft, die mit der Längsachse des Schneckenzylinders (6) fluchtet, besteht und wobei zwischen dem Ausgang des horizontal ausgerichteten Schneckenvorraums (23) und der vertikal nach unten gerichteten Einspritzdüse (8) eine geeignete Umlenk-Vorrichtung (26) installiert ist,
dadurch gekennzeichnet,
daß die Plastifiziereinheit (3) und die Spritzeinheit (4) derart auf dem oberen Ende (2) der Schließvorrichtung (1) angeordnet sind, daß sich die Spritzeinheit (4) ausgangsseitig an die Plastifiziereinheit (3) anschließt.

2. Plastifizier- und Spritzeinheit nach Anspruch 1,
dadurch gekennzeichnet,
daß die Umlenk-Vorrichtung (26) sowohl mit dem ausgangsseitigen Ende des Schneckenzylinders (6) als auch mit der Einspritzdüse (8) kraftschlüssig aber lösbar verbunden ist.

3. Plastifizier- und Spritzeinheit nach Anspruch 1 oder 2,
dadurch gekennzeichnet,
daß der durch die Umlenk-Vorrichtung (26) verlaufende Verbindungskanal (30) für die fließfähige Gummimischung einer stetig gekrümmten Kurve folgt.

4. Plastifizier- und Spritzeinheit nach einem der Ansprüche 1 bis 3,
dadurch gekennzeichnet,
daß zumindest das ausgangsseitige Ende des Schneckenzylinders (6) und ein festzuhaltender Bestandteil (25) der Spritzeinheit (4) kraftschlüssig mit dem oberen Ende (2) der Schließvorrichtung (1) verbunden sind.

5. Plastifizier- und Spritzeinheit nach einem der Ansprüche 1 bis 3,
dadurch gekennzeichnet,
daß zumindest das ausgangsseitige Ende des Schneckenzylinders (6) und ein festzuhaltender Bestandteil (25) der Spritzeinheit (4) kraftchlüssig mit einer auf dem oberen Ende (2) der Schließvorrichtung (1) ebenfalls kraftschlüssig montierten Hubvorrichtung (20) verbunden sind.

6. Plastifizier- und Spritzeinheit nach einem der Ansprüche 1 bis 5,
dadurch gekennzeichnet,
daß die Spritzeinheit (4) aus einer einzigen Kolben-Zylinder-Anordnung (5) besteht, deren Längsachse mit der Längsachse des Schneckenzylinders (6) fluchtet.

7. Plastifizier- und Spritzeinheit nach Anspruch 6,
dadurch gekennzeichnet,
daß das dem Kolben (24) der Kolben-Zylinder-Anordnung (5) abgewandte Ende der zugehörigen Kolbenstange (25) dem ausgangsseitigen Ende des Schneckenzylinders (6) zugewandt und als festzuhaltender Bestandteil (25) der Spritzeinheit (4) kraftschlüssig am oberen Ende (2) der Schließvorrichtung (1) bzw. an einer auf diesem Ende kraftschlüssig montierten Hubvorrichtung (20) angeschlagen und das gegenüber der Schließvorrichtung (1) verschiebbar angeordnete Zylindergehäuse (29) der Kolben-Zylinder-Anordnung (5) über geeignete Anschläge (17, 18) und dazwischen installierte Zuganker (16) starr mit der Plastifizierschnecke (10) verbunden ist.

## Claims

1. Plastification (3) and injection unit (4) for rubber injection moulding machines with vertically operating clamping assembly (1) and central injection (8) of the flowable rubber compound from above into the cavity or cavities arranged inside the mould, the plastification unit (3) consisting of a screw cylinder (6) with its longitudinal axis in horizontal position, and a rotating screw drive (7), the injection unit (4) consisting of one or several piston-cylinder arrangement(s) (injection cylinder(s)) (24, 25, 29) with the longitudinal axis, or axes, also in horizontal position, and which by means of suitable rigid connecting elements (16, 17, 18) move the plastifying screw (10) so as to work as a ram inside the screw cylinder (6), the line of application of the injection force produced by the said piston-cylinder arrangement(s) (24, 25, 29) being in alignment with the longitudinal axis of the screw cylinder (6), a suitable deviating device (26) being installed between the outlet of the horizontally arranged tab (23) and the vertically arranged injection nozzle (8) pointing downward,
characterized in
that the plastification unit (3) and the injection unit (4) are so arranged at the upper end (2) of the clamping assembly (1) that the injection unit (4) is located at the outlet side of the plastifying unit (3).

2. Plastification and injection unit according to claim 1,
characterized in
that the deviating device (26) is rigidly connected with but can be detached from both the outlet end of the screw cylinder (6) and the injection nozzle (8).

3. Plastification and injection unit according to claim 1 or 2,
characterized in
that the connecting channel (30) installed in the deviating device (26) and conveying the flowable rubber compound follows a continuous curve.

4. Plastification and injection unit according to anyone of the claims 1 to 3,
characterized in
that at least the outlet end of the screw cylinder (6) and a component part (25) of the injection unit (4), which has to be firmly fixed, are rigidly connected with the upper end (2) of the clamping assembly (1)

5. Plastification and injection unit according to anyone of the claims 1 to 3,
characterized in
that at least the outlet end of the screw cylinder (6) and a component part (25) of the injection unit (4), which has to be firmly fixed, are rigidly connected with a lifting device (20) which is also rigidly mounted at the upper end (2) of the clamping assembly (1).

6. Plastification and injection unit according to anyone of the claims 1 to 5,
characterized in
that the injection unit (4) consists of only one piston-cylinder assembly (5) the longitudinal axis of which is in alignment with the longitudinal axis of the screw cylinder (6).

7. Plastification and injection unit according to claim 6,
characterized in
that the far end of the piston rod (25) as referred to the piston (24) of the piston-cylinder assembly (5) is adjacent to the outlet end of the screw cylinder (6) and rigidly mounted at the upper end (2) of the clamping assembly (1) or at a lifting device (20) rigidly mounted at that upper end, as a component part (25), to be firmly fixed, of the injection unit (4), and that the cylinder housing (29) of the piston-cylinder assembly (5) shiftable against the clamping assembly (1) is rigidly connected with the plastification screw (10) by means of suitable brackets (17, 18) and tie rods (16) mounted between the brackets.

## Revendications

1. Unité de plastification (3) et d'injection (4) pour machines de moulage par injection, avec assemblage de fermeture (1) fonctionnant verticalement, à injection centrale par le haut (8) du mélange de caoutchouc fluidifiable dans la ou les cavité(s) disposée(s) dans le moule, l'unité de plastification (3) se composant d'un cylindre à vis sans fin (6) à axe longitudinal dans le sens horizontal ainsi que d'un mécanisme de commande rotatif (7) entraînant la vis sans fin, l'unité d'injection (4) se composant d'un ou de plusieurs groupe(s) de cylindres-piston (cylindre(s) d'injection) (24, 25, 29), également à axe longitudinal dans le sens horizontal, actionnant la vis de plastification (10) comme piston à l'intérieur du cylindre (6) moyennant des éléments adéquats de raccordement rigide (16, 17, 18), la ligne d'action de la force d'injection produite par lesdits groupes de cylindres-piston (24, 25, 29) étant alignée sur l'axe longitudinal du cylindre à vis (6), un dispositif de guidage recourbé (26) de construction adéquate étant installé entre la sortie de la chambre de vis (23), disposée horizontalement, et la tuyère d'injection (8) disposée verticalement et dirigée vers le bas,
caractérisée par
ce que l'unité de plastification (3) et l'unité d'injection (4) sont disposées à l'extrémité supérieure (2) de l'assemblage de fermeture (1) d'une telle manière que l'unité d'injection (4) se raccorde du côté sortie à l'unité de plastification (3).

2. Unité de plastification et d'injection suivant la revendication 1
caractérisée par
ce que le dispositif de guidage recourbé (26) est raccordé de façon rigide mais détachable du côté sortie du cylindre à vis sans fin (6) d'une part et de la tuyère d'injection (8) d'autre part.

3. Unité de plastification et d'injection suivant la revendication 1 ou 2
caractérisée par
ce que le canal de raccordement (30), incorporé dans le dispositif de guidage recourbé (26), épouse une courbure régulière pour l'écoulement du mélange de caoutchouc fluidifiable.

4. Unité de plastification et d'injection suivant l'une des revendications 1 à 3
caractérisée par
ce qu'au moins l'extrémité côté sortie du cylindre à vis sans fin (6) et un élément à être fixé (25) de l'unité d'injection (4), sont raccordés de façon rigide à l'extrémité supérieure (2) de l'assemblage de fermeture (1).

5. Unité de plastification et d'injection suivant l'une des revendications 1 à 3
caractérisée par
ce qu'au moins l'extrémité côté sortie du cylindre à vis sans fin (6) et un élément à être fixé (25) de l'unité d'injection (4) sont raccordés de façon rigide à un dispositif de levage (20) qui est également monté de façon rigide sur l'extrémité supérieure (2) de l'assemblage de fermeture (1).

6. Unité de plastification et d'injection suivant l'une des revendications 1 à 5,
caractérisée par
ce que l'unité d'injection consiste d'un seul assemblage de cylindrepiston (5) dont l'axe longitudinal s'aligne avec l'axe longitudinal du cylindre à vis sans fin (6).

7. Unité de plastification et d'injection suivant la revendication 6,
caractérisée par
ce que la tige (25) du piston (24) de l'assemblage cylindre-piston (5) est avec son bout opposé au dit piston (24) rapprochée de l'extrémité côté sortie du cylindre à vis sans fin (6) et montée de façon rigide, comme élément à être fixé (25) de l'unité d'injection (4), sur l'extrémité supérieure (2) de l'assemblage de fermeture (1) ou sur un dispositif de levage (20) monté de façon rigide sur cette même extrémité (2), et que la boîte du cylindre (29) de l'assemblage cylindre-piston (5), déplaçable par rapport à l'assemblage de fermeture (1), est reliée de façon rigide avec la vis sans fin de plastification (10) par des oeuillets de fixation adéquats (17, 18) et des tirants d'ancrage (16) montés entre ces derniers.
